# EUROPEAN PATENT SPECIFICATION

(11) **EP 1 745 875 B1**
(45) Date of publication and mention of the grant of the patent: **29.06.2011**
(21) Application number: 06117472.8
(22) Date of filing: 19.07.2006
(51) Int. Cl.: B23D 57/00, B28D 1/08

(54) **Apparatus for the sawing of stone materials**
Vorrichtung zum Sägen von Gestein
Appareil pour scier du materiaux en pierre

(30) Priority: 22.07.2005 IT FI20050166
(43) Date of publication of application: 24.01.2007
(73) Proprietor: Corsi, Andrea, 54033 Carrara MS (IT)
(72) Inventor: Corsi, Andrea, 54033 Carrara MS (IT)
(74) Representative: Bardini, Marco Luigi

(56) References cited:
- DE-C- 366 600
- DE-C- 548 791
- JP-A- 2 292 165

## Description

The present invention relates to the field of the working of stone materials, in particular but not exclusively marble and granite. More specifically, it refers to a new apparatus for the sawing of the aforesaid materials in slabs.

Devices of the so-called "multi-wire" type are known for sawing substantially parallelepiped blocks of stone material so as to obtain a plurality of slabs of a certain thickness, simultaneously with a single cutting operation. These devices consist in frameworks wherein a plurality of diamond wires are tightened in a parallel fashion between banks of rollers supported by two spaced-apart uprights. The distance between the uprights is such that the block of material to be cut can be inserted between them, while the banks of rollers are mounted on carriages which are slidable along the uprights and driven by appropriate operation and control means.

Further driving means operate on one of the groups of rollers, bringing it into rotation, thus causing a corresponding motion of the wires along their own axis. In this manner, the cutting wires, tightened between the two uprights, engage with the block following the lowering operation of the carriages, and carry out the sawing, assisted by suitable lubricating and slag washing systems. An analogous general structure is shared also by known single-wire devices, such as the one disclosed in DE366600, which shows an apparatus according to the preamble of claim 1.

The thickness of the slabs obtainable is obviously determined by the distance between the parallel wires, in turn a function of the pitch (distance between one roller and the next) within a single bank. Since the thickness of every single roller cannot fall below a certain minimum size, without its being incapable of sustaining the forces generated during the cutting action, it is impossible to produce slabs as thin as desired. The minimum pitch which can be obtained in the devices according to the known art is about 3 cm, so that, also considering the effect of the width of the wire (about 8 mm), it is not possible to realise slabs having a thickness of less than 2 cm.

The object of the present invention is to resolve the two above mentioned problems by providing a new apparatus for the diamond wire sawing of stone materials, generally belonging to the type described above, which permits to obtain slabs of thickness lower than the minimum thicknesses permitted by the known devices.

Such object is achieved with the apparatus for the sawing of stone materials according to the present invention, whose essential characteristics are defined by the first of the attached claims.

Characteristics and advantages of the apparatus for the sawing of stone materials according to the present invention shall be clearer from the following description of one of its embodiments, made as exemplifying and not limiting and with reference to the attached drawings, wherein:
- figure 1 is a schematic elevational view of the overall configuration of the apparatus according to the invention;
- figure 2 is a view analogous to that of figure 1, with the apparatus in operation;
- figure 3 represents an exemplifying scheme of the path followed by a diamond wire in the apparatus according to the invention; and
- figure 4 shows a detail of two banks of rollers mounted next to each other in the apparatus according to the invention.

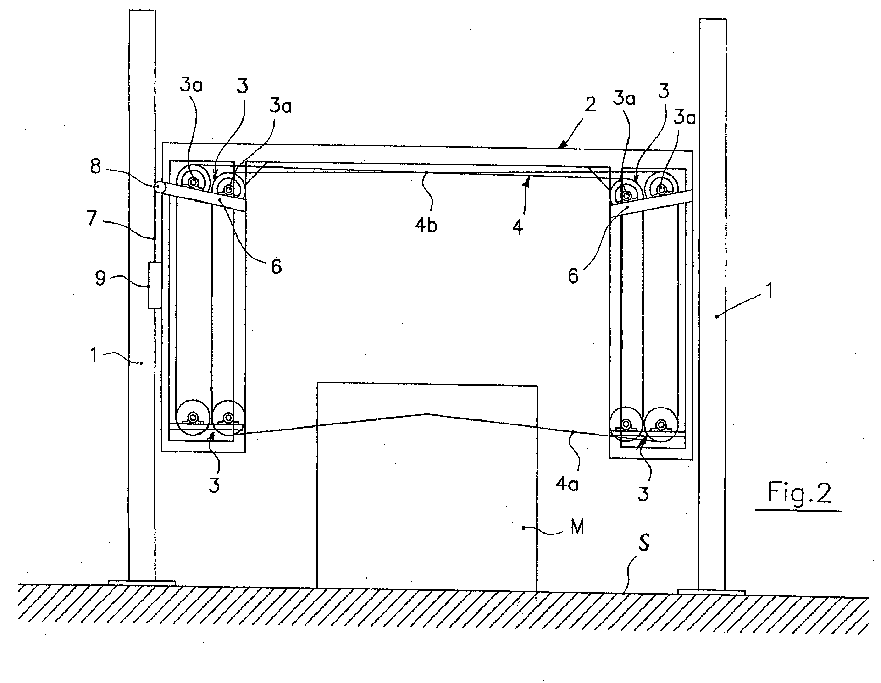

With reference to the above figures, the apparatus according to the invention has an overall configuration comparable with that of the known art, comprising therefore a pair of uprights 1, standing on the surface of the ground S, mutually spaced so as to permit the positioning of a block of material M to be cut between them; the block M is generically parallelepiped and is represented in figure 2.

The two uprights 1 slidably support a frame 2, which, under the action of conventional driving means (not shown), is adapted to be progressively moved downward during the sawing operations, and be moved upward again after the work has been completed. On the frame 2, banks of rollers 3 are mounted, guiding and directing the diamond wire 4 set for sawing.

As will be better illustrated shortly, according to the invention a single wire 4 is used which is wound in coaxial loops between rollers 3. The latter are arranged in banks, each bank comprising a plurality of coaxially adjacent rollers. The banks are in turn distributed on the frame 2, so as to arrange the wire 4 in substantially quadrilateral loops whose vertices are defined by the engagement with the banks. Each loop comprise, in particular, in addition to the vertical lines running along the uprights 2, horizontal lines 4a, 4b taut between the uprights themselves, of which the lower line 4a is the long one which carries out the sawing.

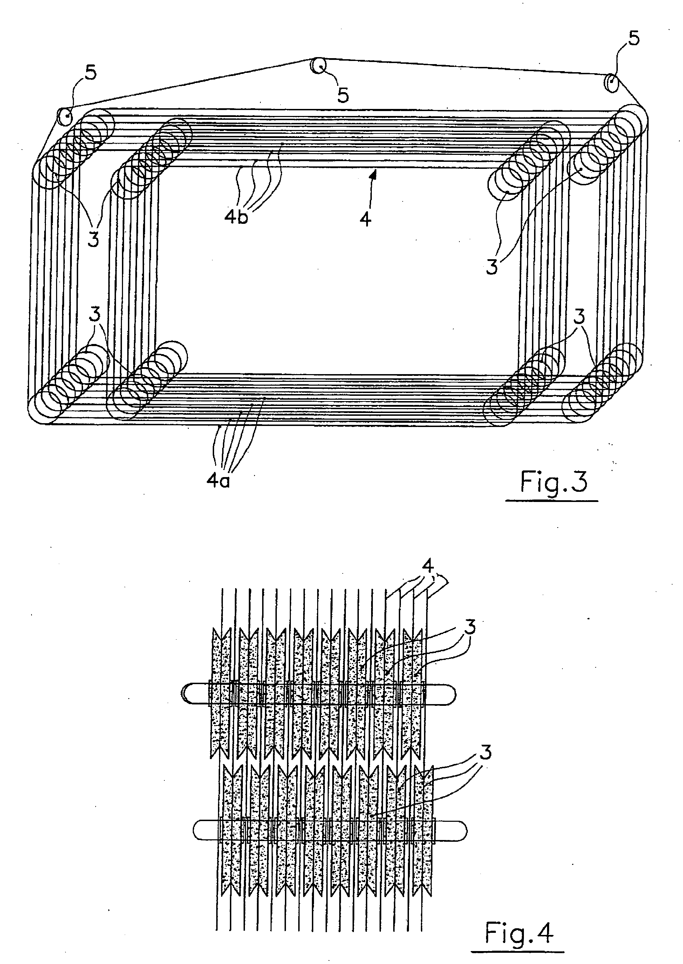

As shown in figure 3, the wire 4 then extends with spiral-like progression between the rollers 3 of the various banks, the axis of the spiral being arranged parallel to the axes of the banks, the various parallel-arranged loops determining, with their number, the number of cuts which the apparatus is capable of simultaneously carrying out on the material M. The movement of the wire, in this case once again in accordance with the prior art, takes place due to the rotation given to one of the banks of rollers 3 by further driving means (not shown).

Returning to the arrangement of the rollers 3, it is noted from the figures that, according to the invention, this is peculiar with respect to the prior art. Indeed, for every deviation zone of the wire, corresponding as said to a vertex of the quadrilateral loop, not only a single bank one but two distinct banks are arranged in parallel, one closer to the related upright 2 and the other displaced towards the interior of the apparatus.

As is clearly seen in figure 4, the two banks are moreover axially staggered with respect to each other by an amount equal to half of the pitch of the rollers in a single bank. The staggering is reversed between the two sides of the apparatus, such that if in one upright 2 the more internal banks are staggered in one direction, in the other upright it will be the more external groups which are staggered in the same direction.

With the aid once again also of figure 3, it will be understood that thanks to this structural feature, making the wire 4 alternately pass between corresponding rollers of banks which are staggered in one direction, and rollers of banks which are staggered in the other direction, the spiral progression leads to obtaining parallel material cutting lines 4a which are spaced half the pitch of the rollers in each single bank. Thus, slabs may be realised of correspondingly thin thickness. Still in the same figure 3, it is noted how the wire 4 is endless, with deviation pulleys 5 which, in the upper zone, guide the wire itself between the entrance end and the exit end of the spiral.

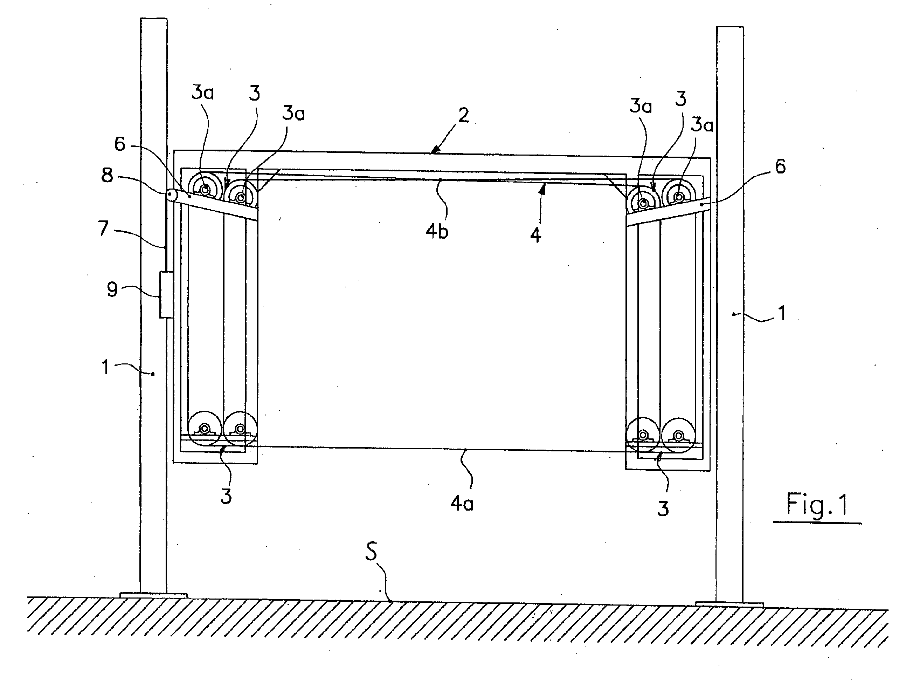

Turning back now to figures 1 and 2, it can be seen that the banks of rollers 3 placed at the upper vertices of the loops are slidably supported, on the respective central shafts indicated at 3a, by linear guides 6 which are tilted such to descend while moving from the outside towards the inside of the apparatus. In other words, the guides 6 descend starting from the uprights 2. In each pair of banks, the shafts 3a are connected with each other by a crossbar, not shown, so that the two banks slide along their own guide 6 keeping a fixed mutual position. A chain 7 integrally extends from one of the two pairs of upper banks, for example the one arranged on the left as seen in figures 1 and 2. The chain 7 extends towards the related upright 2, and after having engaged with a deflection reel 8 fixed to the frame 3, it vertically descends along the upright itself up to a counterweight 9 connected to the end.

A position detection sensor is arranged along the upright 2 in order to detect the attainment of a pre-established height of the counterweight 9. The sensor, not shown, is arranged between the counterweight 9 and the deflection reel 8, and is connected for the signal transmission to a control system having obvious characteristics, not shown; the control system is capable of switching off the driving motor that lowers the frame 2, in response to a signal emitted when the pre-established height is reached by the counterweight 9.

Such control system is moreover capable of detecting the power absorption of the motor (or motors) which drive the cutting motion of the wire 4, and to interrupt the power feed to the frame-lowering motor upon comparison of the aforesaid absorption with pre-set absorption values corresponding with a standard working condition, a limit stress condition and a minimum stress condition.

Then, the apparatus according to the invention operates in the following manner. First, the counterweight 9 is adjusted so to realise the desired tensioning of the wire. Since this is a single wire 4, it is evident that, upon the variation of the counterweight mass, and upon the corresponding variation of the position of the pair of roller banks controlled by the counterweight itself, there will be a greater or lesser tensioning of the wire; the tensioning will be constant along all parts of the wire. Such tensioning is in particular reflected in a certain V-shaped deformation of the cutting lines 4a of the wire 4, when, due to the lowering of the frame 2, they engage with the material to be cut, sustaining therefore an upward-directed cutting force.

Therefore, in order to calibrate the counterweight 9, it must be considered that, as a function of the material to be cut and of all other working conditions, a regular cutting action responds to a certain pre-established extent of upwards V-shaped deformation of the cutting lines and, correspondingly, to a specific height position of the counterweight along the upright 2. If, due to an anomalous stress (for example an unforeseen resistance of the material to be cut), even only one of the cutting lines 4a of the wire 4 is stretched, such stretching is distributed in a uniform manner over all the lines, maintaining a substantially homogeneous cutting action.

The stretching involves an increase of the extent of the deformation of the cutting line, and a consequent descent of the upper roller banks along the related guides, and finally a rising of the counterweight 9. When this extent of deformation reaches a limit considered unacceptable for the regular continuation of the cutting action, the counterweight, due to the previously carried out calibration, arrives at the level where the sensor is placed. The sensor, detecting the presence of the counterweight, emits the switch-off signal of the motor controlling the lowering of the frame 2.

The diamond wire 4 continues to cut, progressively recovering the excessive deformation and hence the counterweight 9 is made to descend once again. The sensor detects the descent, and inferring from this that the deformation has once again assumed a correct extent, it reinitiates the descending action of the frame 2. The tensioning of the cutting lines 4a, in addition to always remaining uniform among the lines, can therefore be maintained in a reliable manner, within the limits considered suitable for an optimal cutting.

An additional control is provided, as mentioned above, related with the power absorption by the driving motor of the rollers, and therefore of the movement of the wire along its own axis. In practice, after the roller driving motor has exceeded the above mentioned standard absorption value, the frame-lowering motor is switched off. The cutting force tends to diminish, and consequently the power absorption of the wire driving motor decreases. Once the absorption value has returned below the standard value, the frame-lowering motor is restarted. In case the maximum permitted value is exceeded, this evidently indicating that critical conditions are reached, the control system stops the entire apparatus, sending an alarm signal at the same time.

Finally, if the absorption falls below the predetermined minimum threshold value, this will indicate a loadless operation, and therefore a breaking of the wire. Also in this case, the apparatus will be stopped and an alarm signal emitted. Regarding this last functionality, it must be noted that according to the invention the breaking of the wire leads immediately to the shutdown of the entire apparatus, diminishing the possibility of damages to the material and/or to the apparatus itself. These damages often occurs in conventional multi-wire machines when a broken wire interferes with the other wires which continue to work.

It is clear from the above that the apparatus according to the invention fully attains the stated objects, permitting the obtainment of much thinner material slabs than that which can be currently achieved with the known devices, without affecting the strength and reliability of the apparatus since the pitch of the single banks, and therefore the dimensions of the related rollers, are safely maintained, and the reduced spacing between the cutting lines is obtained by mutually staggered double banks. The adoption of a single wire permits maintaining uniform tensioning of the various cutting lines and also permits controlling such tensioning, as seen above, through a simple structural expedient such as that of the slidable mounting of one or more banks of rollers and related position control.

Numerous structural variations can modify the apparatus with respect to that conceptually exemplified in the figures. The structure with double, staggered banks of rollers can be realised with varying geometries and configurations, provided that they are capable of ensuring the spiral progression of the wire as described above, with the wire that, winding around a roller of a bank, is capable of inserting itself - and freely sliding - in the space between the rollers of the adjacent bank, or vice versa.

Analogous considerations are valid for the guide system of the movable roller banks, while it is clear that the counterweight system, even if advantageous for its simplicity, can be assisted by one or springs, or be substituted by more sophisticated systems, in any case capable of exerting a pre-established force opposing the movement of the rollers along the guides (a movement radially approaching and moving away from the spiral axis), and sending a control signal in response. To this end, dynamometric spring systems or the like can be employed.

Variations and/or modifications can be brought to the apparatus for the sawing of stone materials according to the present invention without departing from the protective scope of the same invention as defined by the attached claims.

## Claims

1. An apparatus for the sawing of stone materials comprising a frame (2) which is slidably supported for lowering from above onto a block of material (M) to be cut, diamond wire means (4) extended between banks of rollers (3) which are supported by the frame so as to define a plurality of adjacent and parallel cutting wires (4a), the apparatus further comprising drive means for driving the lowering movement of said frame (2), drive means for driving the rotation of at least one bank of said rollers in order to feed the cutting movement to the wire means (4), and control means for controlling said driving means, said wire means (4) comprising a single wire (4) arranged in a spiral-like fashion and forming coaxial polygonal loops, the apparatus being **characterised in that** said banks of rollers are arranged in pairs placed on respective vertices of said loops, in each pair the two banks being axially staggered from each other by about half the pitch of the rollers in a single bank, so that said wire (4), being alternately engaged between rollers belonging to banks staggered in one direction and rollers belonging to banks staggered in the other direction, defines a plurality of cutting lines (4a) spaced at about half said pitch.

2. The apparatus according to claim 1, wherein said wire (4) has an endless configuration, being engaged with deviation pulleys (5) which, in the upper zone of said frame (2), guide said wire between the exit and the entrance of the spiral.

3. The apparatus according to claim 1 or 2, wherein said frame (2) is slidably supported on two sides by a pair of uprights (1), said loops being substantially quadrilaterals, the wire (4) being deviated between four pairs of banks arranged in proximity to respective uprights (1), each pair of banks comprising a bank of rollers closer to the related upright and a bank displaced towards the interior of the apparatus.

4. The apparatus according to claim 3, wherein the mutual axial staggering of said banks inside each pair is reversed from one side of the apparatus to the other, so that if in the pairs adjacent to one upright the more internal banks are staggered in one direction, in the other upright it is the more external groups to be staggered in that same direction.

5. The apparatus according to any of the previous claims, wherein at least one of said pairs of banks is supported by said frame (2) on guide means (6) which permit a movement in a radial direction with respect to the common axis of said loops of said wire (4), the apparatus further comprising adjustable means (7, 8, 9) for hindering said movement, and sensor means for detecting the extent of said movement, said control means being set for controlling said drive means in response to a signal emitted by said sensor means.

6. The apparatus according to claim 5, wherein said adjustable hindering means comprise counterweight means (9) for hindering the sliding of a pair of banks towards the inside of said spiral, said sensor means comprising a position sensor of said counterweight, for sending a switch-off signal to said frame lowering drive means when said counterweight reaches a predetermined height.

7. The apparatus according to claim 6, wherein said counterweight means (9) are supported by a chain (7) extending from the central shafts of the related pair of banks and deviated so as to vertically descend on one side of the apparatus.

8. The apparatus according to claim 6 or 7, wherein said counterweight means (9) are assisted by spring means.

9. The apparatus according to any of the claims 5 to 8, wherein said guide means (6) comprise support guides (6) for guiding the central shafts (3a) of the banks of rollers placed at the upper vertices of the loops, said guides being tilted so as to descend when moving from the outside towards the inside of the apparatus.

10. The apparatus according to any of the previous claims, wherein said control means also operate in response to means for measuring of the power absorption of said roller rotation drive means, so that when a predetermined standard absorption value is exceeded, said frame lowering drive means are switched off.

11. The apparatus according to claim 10, wherein upon exceeding a predetermined value of permitted maximum absorption, said control means switch off both said frame lowering drive means and said roller rotation drive means.

12. The apparatus according to claim 10 or 11, wherein when the measure of the absorption descends below a predetermined minimum threshold value, said control means switch off both said frame lowering drive means and said roller rotation drive means.

## Patentansprüche

1. Vorrichtung zum Sägen von Steinmaterialien, enthaltend einen Rahmen (2), der verschiebbar zum Absenken von oben auf einen Materialblock (M) gehalten ist, der geschnitten werden soll, Diamantdrahteinrichtungen (4), die zwischen Bänken von Walzen (3) verlaufen, die von dem Rahmen gehalten werden, um eine Mehrzahl von benachbarten und parallelen Schneidedrähten (4a) zu definieren, wobei die Vorrichtung ferner enthält Antriebseinrichtungen zum Antreiben der Absenkbewegung des Rahmens (2), Antriebseinrichtungen zum Antreiben der Drehung von wenigstens einer Bank der Walzen, um die Schneidebewegung zu den Drahteinrichtungen (4) zuzuführen, und Steuereinrichtungen zum Steuern der Antriebseinrichtungen, wobei die Drahteinrichtungen (4) einen einzelnen Draht (4) enthalten, der in einer spiralähnlichen Weise angeordnet ist und koaxiale polygonale Schlaufen bildet, wobei die Vorrichtung **dadurch gekennzeichnet ist, dass** die Bänke von Walzen in Paaren angeordnet sind, die an jeweiligen Ecken der Schlaufen platziert sind, wobei in jedem Paar die zwei Bänke axial gegeneinander um etwa die Hälfte des Abstandes der Walzen in einer einzelnen Bank versetzt sind, so dass der Draht (4), der abwechselnd zwischen Walzen, die zu Bänken gehören, die in einer Richtung versetzt sind, und Walzen in Eingriff sind, die zu Bänken gehören, die in der anderen Richtung versetzt sind, eine Mehrzahl von Schneidelinien (4a) definiert, die um etwa die Hälfte des Abstandes beabstandet sind.

2. Vorrichtung nach Anspruch 1, wobei der Draht (4) eine Endlosfiguration hat, die mit Ablenkscheiben (5) in Eingriff ist, die in der oberen Zone des Rahmens (2) den Draht zwischen dem Ausgang und dem Eingang der Spirale führen.

3. Vorrichtung nach Anspruch 1 oder 2, wobei der Rahmen verschiebbar an zwei Seiten durch ein Paar von Ständern (1) gehalten ist, wobei die Schlaufen im Wesentlichen Vierecke sind, wobei der Draht (4) zwischen vier Paaren von Bänken abgelenkt wird, die in der Nähe zu jeweiligen Ständern (1) angeordnet sind, wobei jedes Paar von Bänken eine Bank von Walzen näher zu dem entsprechenden Ständer und eine Bank enthält, die zum Inneren der Vorrichtung versetzt ist.

4. Vorrichtung nach Anspruch 3, wobei das gegenseitige axiale Versetzen der Bänke innerhalb jedes Paares von einer Seite der Vorrichtung zu der anderen umgekehrt ist, so dass, wenn in den Paaren benachbart zu einem Ständer die mehr inneren Bänke in eine Richtung versetzt sind, es in dem anderen Ständer die mehr äußeren Gruppen sind, die in derselben Richtung versetzt sind.

5. Vorrichtung nach einem der vorhergehenden Ansprüche, wobei wenigstens eines der Paare von Bänken von dem Rahmen (2) an Führungseinrichtungen (6) gehalten ist, die eine Bewegung in einer radialen Richtung bezüglich der gemeinsamen Achse der Schlaufen des Drahtes (4) gestatten, wobei die Vorrichtung ferner einstellbare Einrichtungen (7, 8, 9) zum Behindern der Bewegung und Sensoreinrichtungen zum Detektieren des Ausmaßes der Bewegung enthält, wobei die Steuereinrichtungen eingestellt sind, um die Antriebseinrichtungen in Abhängigkeit von einem Signal zu steuern, das von den Sensoreinrichtungen ausgegeben wurde.

6. Vorrichtung nach Anspruch 5, wobei die einstellbaren Behinderungseinrichtungen Gegengewichteinrichtungen (9) enthalten, um das Verschieben eines Paares von Bänken zu der Innenseite der Spirale zu behindern, wobei die Sensoreinrichtungen einen Positionssensor des Gegengewichts enthalten, um ein Ausschaltsignal zu den RahmenabsenkungsAntriebseinrichtungen zu senden, wenn das Gegengewicht eine vorgegebene Höhe erreicht.

7. Vorrichtung nach Anspruch 6, wobei die Gegengewichteinrichtungen (9) von einer Kette (7) gehalten werden, die sich von den zentralen Wellen des entsprechenden Paares von Bänken aus und abgelenkt erstreckt, um an einer Seite der Vorrichtung vertikal herunter zu kommen.

8. Vorrichtung nach Anspruch 6 oder 7, wobei die Gegengewichteinrichtungen (9) von Federeinrichtungen unterstützt werden.

9. Vorrichtung nach einem der Ansprüche 5 bis 8, wobei die Führungseinrichtungen zum Führen der zentralen Wellen (3a) der Bänke von Walzen, die an den oberen Spitzen der Schlaufen platziert sind, Halteführungen (6) enthalten, wobei die Führungen geneigt sind, um beim Bewegen von der Außenseite zur Innenseite der Vorrichtung abzufallen.

10. Vorrichtung nach einem der vorhergehenden Ansprüche, wobei die Steuereinrichtungen auch in Abhängigkeit von Einrichtungen zum Messen der Leistungsabsorption der Walzendreheinrichtungen wirken, so dass, wenn ein vorgegebener Standartabsorptionswert überschritten wird, die Rahmenabsenkungsantriebseinrichtungen ausgeschaltet werden.

11. Vorrichtung nach Anspruch 10, wobei auf das Übersteigen eines vorgegebenen Wertes einer zugelassenen maximalen Absorption die Steuereinrichtungen sowohl die Rahmenabsenkungsantriebseinrichtungen als auch die Walzendrehantriebseinrichtungen abschalten.

12. Vorrichtung nach Anspruch 10 oder 11, wobei, wenn die Messung der Absorption unter einen vorgegebenen minimalen Schwellenwert abfällt, die Steuereinrichtungen sowohl die Rahmenabsenkungsantriebseinrichtungen als auch die Walzendrehantriebseinrichtungen abschalten.

## Revendications

1. Un appareil pour le sciage de matériaux en pierre comportant un cadre (2) qui est monté de façon coulissante pour descendre sur un bloc de matériau (M) à couper, des moyens de fils diamants (4) s'étendant entre des rangées de rouleaux (3) qui sont soutenus par le cadre de façon à définir une pluralité de fils de coupe adjacents et parallèles (4a), l'appareil comportant en outre des moyens d'actionnement pour actionner le mouvement de descente du dit cadre (2), des moyens d'actionnement pour actionner la rotation d'au moins une rangée de dits rouleaux de façon à imprimer le mouvement de coupe aux dits moyens de fils (4), et des moyens de commande des dits moyens d'actionnement, lesdits moyens de fils (4) comprenant un fil unique (4) agencé en forme de spirale et formant des boucles polygonales coaxiales, l'appareil étant **caractérisé en ce que** lesdites rangées de rouleaux sont agencées par paires placées aux sommets respectifs des dites boucles, dans chaque paire les deux rangées étant décalées axialement l'une par rapport à l'autre d'environ un demi pas des rouleaux dans une seule rangée, de sorte que ledit fil (4), étant alternativement engagé entre des rouleaux appartenant aux rangées décalées dans une direction et des rouleaux appartenant aux rangées décalées dans l'autre direction, définit une pluralité de lignes de coupe (4a) espacées d'environ une moitié du dit pas.

2. L'appareil selon la revendication 1, où ledit le fil (4) a une configuration sans fin, coopérant avec des poulies de déviation (5) qui, dans la zone supérieure du dit cadre (2), guident ledit fil entre la sortie et l'entrée de la spirale.

3. L'appareil selon l'une des revendications 1 et 2, où ledit cadre (2) est monté de façon coulissante sur deux côtés par une paire de montants (1), lesdites boucles ayant sensiblement la forme de quadrilatères, le fil (4) étant dévié entre quatre paires de rangées agencées à proximité des montants respectifs (1), chaque paire de rangées comprenant une rangée de rouleaux plus proche du montant correspondant et une rangée déplacée vers l'intérieur de l'appareil.

4. L'appareil selon la revendication 3, où le décalage axial mutuel des dites rangées à l'intérieur de chaque paire est inversé d'un côté de l'appareil par rapport à l'autre, de façon que si, dans les paires adjacentes à un montant, les rangées les plus à l'intérieur sont décalées dans une direction, dans l'autre montant ce sont les groupes les plus à l'extérieur qui sont décalés dans la même direction.

5. L'appareil selon l'une quelconque des revendications précédentes, où au moins l'une des dites paires de rangées est portée par ledit cadre (2) sur des moyens de guidage (6) qui permettent un mouvement dans une direction radiale par rapport à l'axe commun des dites boucles du dit fil (4), l'appareil comportant en outre des moyens ajustables (7, 8, 9) pour empêcher ledit mouvement, et des moyens de capteurs pour détecter l'étendue du dit mouvement, lesdits moyens de commande étant agencés pour commander lesdits moyens d'actionnement en réponse à un signal émis par lesdits moyens de capteurs.

6. L'appareil selon la revendication 5, où lesdits moyens ajustables d'empêchement comportent des moyens de contrepoids (9) pour empêcher le glissement d'une paire de rangées vers l'intérieur de ladite spirale, lesdits moyens de capteurs comprenant un capteur de position du dit contrepoids, pour envoyer un signal d'arrêt aux dits moyens d'actionnement de descente du cadre quand ledit contrepoids atteint une hauteur prédéterminée.

7. L'appareil selon la revendication 6, où lesdits moyens de contrepoids (9) sont soutenus une chaîne (7) s'étendant à partir des arbres centraux de la paire de rangées correspondante et déviés afin de descendre verticalement sur un côté de l'appareil.

8. L'appareil selon l'une des revendications 6 et 7, où lesdits moyens de contrepoids (9) sont assistés par des moyens de ressort.

9. L'appareil selon l'une quelconque des revendications 5 à 8, où lesdits moyens de guidage (6) comportent des guides supports (6) pour guider les arbres centraux (3a) des rangées de rouleaux placées aux sommets supérieurs des boucles, lesdits guides étant inclinés de façon à descendre d'une certaine quantité, de l'extérieur vers l'intérieur de l'appareil.

10. L'appareil selon l'une quelconque des revendications précédentes, où lesdits moyens de commande fonctionnent également en réponse à des moyens pour mesurer la puissance absorbée par lesdits moyens d'actionnement en rotation des rouleaux, de façon que, quand une valeur de puissance absorbée standard prédéterminée est dépassée, lesdits moyens d'actionnement de descente du cadre sont arrêtés.

11. L'appareil selon la revendication 10, où lors d'un dépassement d'une valeur prédéterminée de puissance absorbée maximale permise, lesdits moyens de commande arrêtent à la fois lesdits moyens d'actionnement de descente du cadre et lesdits moyens d'actionnement de la rotation des rouleaux.

12. L'appareil selon l'une des revendications 10 et 11, où quand la puissance absorbée descend en-dessous d'une valeur de seuil minimale prédéterminée, lesdits moyens de commande arrêtent à la fois lesdits moyens d'actionnement de descente du cadre et lesdits moyens d'actionnement de la rotation des rouleaux.
